# EUROPÄISCHE PATENTSCHRIFT

(11) **EP 1 968 839 B1**
(45) Veröffentlichungstag und Bekanntmachung des Hinweises auf die Patenterteilung: **13.03.2013**
(21) Anmeldenummer: 06830736.2
(22) Anmeldetag: 20.12.2006
(51) Int. Cl.: B60W 50/04

(54) **VERFAHREN ZUR ÜBERWACHUNG VON MEHRMOTORENANTRIEBEN**
METHOD FOR MONITORING MULTI-ENGINE DRIVES
PROCÉDÉ DE SURVEILLANCE DE SYSTÈMES D'ENTRAÎNEMENT MULTIMOTEUR

(30) Priorität: 29.12.2005 DE 102005062870
(43) Veröffentlichungstag der Anmeldung: 17.09.2008
(73) Patentinhaber: ROBERT BOSCH GMBH, 70442 Stuttgart (DE)
(72) Erfinder: KAEFER, Oliver, 71711 Murr (DE); NIEMANN, Holger, 71634 Ludwigsburg (DE); HAGMAN, Per, 70469 Stuttgart (DE); SEEL, Andreas, 71282 Hemmingen (DE)
(86) Internationale Anmeldenummer: PCT/EP2006/069960
(87) Internationale Veröffentlichungsnummer: WO 2007/074118

(56) Entgegenhaltungen:
- WO-A1-2004/042884
- DE-A1- 19 739 564
- DE-A1- 19 739 565
- DE-A1- 19 932 309
- US-A1- 2005 272 556

## Beschreibung

Die Erfindung bezieht sich auf ein Verfahren zur Überwachung von Fahrzeugen mit mehreren Antrieben, wobei zumindest einer der Antriebe ein negatives Moment erzeugen kann, so zum Beispiel ein Hybridantrieb für Hybridfahrzeuge.

### Stand der Technik

Aus dem Stand der Technik, DE 103 20 016 A ist eine Steuereinrichtung für eine Antriebseinheit bekannt, die die Antriebseinheit insbesondere hinsichtlich eines abgegebenen Antriebsmomentes steuert oder regelt, wobei die Antriebseinheit eine Brennkraftmaschine eines Kraftfahrzeugs ist. Das Kraftfahrzeug umfasst dabei üblicherweise eine durch den Fahrer des Kraftfahrzeuges betätigbare Fahrerwunsch-Übertragungseinrichtung, insbesondere ein fußbetätigbares Fahrpedal. Dieses ist dafür vorgesehen, ein einen momentanen Betätigungszustand der Fahrerwunsch-Übertragungseinrichtung repräsentierendes Ausgangssignal abzugeben. Eine Steuereinheit empfängt das Ausgangssignal von der Fahrerwunsch-Übertragungseinrichtung und ordnet dem empfangenen Ausgangssignal wenigstens eine Sollausgangsgröße, insbesondere ein Sollantriebsmoment der Antriebseinheit zu. Die Antriebseinheit wird von der Steuereinheit derart angesteuert, dass sich eine von der Antriebseinheit abgegebene Ist-Ausgangsgröße der Soll-Ausgangsgröße annähert. Derartige Steuereinrichtungen sind in verschiedenen Auslegungen für übliche Kraftfahrzeugmotoren, insbesondere Otto-Motoren und Dieselmotoren bekannt, so zum Beispiel Bosch-Motorsteuerungssysteme mit elektronischem Gaspedal (EGAS).

Aus dem Stand der Technik ist ferner bekannt, eine kontinuierliche Momentenüberwachung zur Aufdeckung von Fehlfunktionen im Fahrzeugsteuergerät durchzuführen. Dies dient insbesondere dem Schutz von Fahrinsassen in dem Kraftfahrzeug und externen Verkehrsteilnehmern. Es soll eine ungewollte Beschleunigung des Fahrzeugs verhindert werden. Der Kern der kontinuierlichen Momentenüberwachung ist der Vergleich eines vom Motor bereitgestellten Ist-Momentes mit einem zulässigen Moment. Im Normalfall ist das Ist-Moment kleiner als das zulässige Moment. Falls das Ist-Moment das zulässige Moment übersteigt, liegt ein Fehler im Motorsteuergerät vor und eine zu einem sicheren Fahrzeugzustand führende Fehlerreaktion wird eingeleitet. Die Überwachung von Motorsteuergeräten oder auch Fahizeugsteuergeräten erfolgt üblicherweise nach einem Drei-Ebenen-Überwachungskonzept. Die Motorsteuerung selbst, insbesondere die Vorgabe des Sollmoments, erfolgt dabei in der als Funktionsebene bezeichneten ersten Ebene. Die zweite Ebene (Überwachungsebene) ist als die kontinuierliche Momentenüberwachung ausgeführt. In dieser Ebene wird unter anderem in Abhängigkeit von Fahrzeug- und Motorfunktionen ein zulässiges Moment ermittelt und mit einem Motor-Ist-Moment beispielsweise verglichen. Die zweite Ebene wird aufwendig abgesichert, so zum Beispiel durch eine Doppelablage aller Variablen, einer zyklischen RAM- und einer zyklischen ROM-Prüfung sowie durch eine permanente Programmablaufkontrolle. Eine weitere, dritte Ebene dient zur Rechnerabsicherung.

DE 197 39 565 A1 betrifft ein Verfahren zur Steuerung des Drehmomentes einer Antriebseinheit eines Kraftfahrzeuges, bei welchem das Drehmoment der Antriebseinheit wenigstens nach Maßgabe des Fahrerwunsches eingestellt wird, wobei das Ist-Drehmoment der Antriebseinheit bestimmt wird und wenigstens auf der Basis des Fahrerwunsches ein maximal zulässiges Drehmoment ermittelt wird. Es erfolgt eine Drehmomentenreduzierung und/oder -begrenzung bei Überschreiten des maximal zulässigen Moments durch das Ist-Drehmoment. Dabei wird wenigstens ein Betriebszustand festgestellt, in dem das Drehmoment der Antriebseinheit durch zusätzliche Belastung erhöht ist. Während dieses wenigstens einen Betriebszustandes wird das maximal zulässige Moment erhöht. Insbesondere wird dadurch beim Betrieb mit kalter Antriebseinheit und/oder beim Betrieb belastender Verbraucher das zulässige Moment erhöht.

Aus der DE 199 32 309, die den Oberbegriff des Anspruchs 1 bildet, ist ein Verfahren zur Steuerung einer Antriebseinheit bekannt, bei dem ein maximal zulässiger Wert zu Überwachungszwecken für die Ausgangsgröße für die Antriebseinheit vorgegeben wird.

Bei dem Verfahren der WO 2004/042984 A wird eine Ober-und eine Untergrenze für das Zulässige moment eines Antreibs berüchsichtigt.

Die beschriebenen, aus dem Stand der Technik bekannten Verfahren der Momentenüberwachung sind nicht ohne weiteres auf Hybridfahrzeuge übertragbar. In Hybridfahrzeugen kommen neben einem Verbrennungsmotor mindestens eine weitere Momentenquelle (Motor) zum Einsatz. In den meisten Fällen handelt es sich hierbei um einen Elektroantrieb.

In der Motorsteuerung muss nun das vom Fahrer geforderte Wunschmoment, welches beispielsweise durch Bedienen des Fahrpedals eingestellt wird, auf die vorhandenen Momentenquellen (mindestens 2 Motoren) aufgeteilt werden. Dies geschieht in Abhängigkeit zahlreicher Umgebungsvariablen unter anderem mit dem Ziel, den verbrauchsgünstigsten Betriebspunkt für alle Momentenquellen, d.h. für alle Motoren einzustellen. Bisher wird jedoch im Stand der Technik kein Konzept zur Momentenüberwachung bereitgestellt, das auf die besonderen Anforderungen eines solchen Hybridantriebes mit einem oder mehreren Elektromotoren zusätzlich zu einem Verbrennungsmotor im Antriebsstrang eines Fahrzeugs eingeht. Ein mit dem Antriebsstrang verbundener zusätzlicher Elektromotor kann bei zu hohen Ansteuerströmen genauso eine unerwünschte Fahrzeugbeschleunigung verursachen wie ein "durchgehender" Verbrennungsmotor und erfordert daher ebenso eine kontinuierliche Momentenüberwachung.

In bisherigen Überwachungskonzepten wird nur auf zu hohes Moment hin überwacht. Für Motoren, die kein negatives Moment erzeugen können, ist dies ausreichend, da auf diese Weise ein ungewolltes Beschleunigen des Fahrzeugs sicher vermieden werden kann. Eine neue Fehlermöglichkeit entsteht jedoch bei Systemen mit mehreren Motoren, von denen mindestens einer ein negatives Moment erzeugen kann. Bei diesen Systemen, so zum Beispiel Hybridantrieben, kann es vorkommen, dass das Fahrzeug ungewollt beschleunigt, obwohl das Summen-Sollmoment nicht größer ist als das zulässige Moment. Dies kann dann auftreten, wenn ein Antriebsmotor einen Sollwert für ein Moment außerhalb seines stellbaren Bereiches empfängt. So kann zum Beispiel bei Hybridfahrzeugen ein Laden der Fahrzeugbatterie während der Fahrt erfolgen. Der mindestens eine Elektroantrieb soll ein negatives Moment von zum Beispiel -100 Nm stellen, um die Batterie zu laden, so dass der elektrische Antrieb in diesem Falle im Generatormodus betrieben wird. Um ein gewünschtes Antriebsmoment so zum Beispiel 200 Nm zu erhalten, erhöht das Fahrzeugsteuergerät das Moment des Verbrennungsmotors um diesen Betrag, im gewählten Beispiel 300 Nm. Kann der mindestens eine Elektroantrieb das geforderte negative Moment nicht stellen, so zum Beispiel wegen Temperaturerhöhung oder Überhitzung nur noch ein negatives Moment von -10 Nm abgeben, so liegt ein zu hohes Antriebsmoment, im vorliegenden Beispiel von 290 Nm vor, welches das gewünschte Antriebsmoment von zum Beispiel 200 Nm erheblich übersteigt. Bei bisherigen Konzeptionen von Fahrzeugsteuergeräten würde dieser Fehler nicht bemerkt, da das Summen-Sollmoment korrekt ist und keine Rückmeldung in einer Übeiwachungsebene des Fahrzeugsteuergerätes vorliegt, ob das angeforderte Moment, d.h. das gewünschte Antriebsmoment, stellbar ist. Bei bisher gewählten Lösungen zu diesem Problem erfolgt ein Vergleich zwischen dem zulässigen Moment und einem von den Einzelantrieben des Hybridantriebs abgegebenen Ist-Moment. Dies zieht jedoch einen sehr hohen Aufwand mit sich, da die Funktionsebene der Steller in der Überwachung der Fahrzeugsteuerung abgebildet werden müssten.

Dieses Problem wird durch ein verfahren nach Anspruch 1 gelöst.

### Darstellung der Erfindung

Mit dem Verfahren gemäß der vorliegenden Erfindung wird festgestellt, ob ein zu hohes Antriebsmoment aufgrund eines nicht stellbaren Momentes eines der Einzelantriebe, beispielsweise eines Hybridantriebes vorliegt oder nicht. Dadurch wird die Beherrschbarkeit eines mit einem Hybridantrieb ausgerüsteten Fahrzeuges erheblich erhöht und die Gefährdung von Personen, seien es Fahrzeuginsassen oder seien es andere Verkehrsteilnehmer, erheblich verringert. Erfindungsgemäß wird vorgeschlagen, innerhalb einer Ebene des Fahrzeugsteuergeräts, bevorzugt in der Überwachungsebene, die auch als 2. Ebene bezeichnet wird, eine Momentenbereichsprüfung einzuführen. Die Einzelantriebe eines Hybridantriebes beispielsweise übermitteln dazu die jeweils aktuellen Betriebsgrenzen der Einzelantriebe an die Fahrzeugsteuerung. Das Fahrzeugsteuergerät übernimmt die aktuellen Betriebsgrenzen der Einzelantriebe in der Überwachungsebene (2. Ebene). Zusätzlich zum bisher durchgeführten Momentenvergleich hinsichtlich der Übereinstimmung von Soll-Moment und Ist-Moment oder der Nachführung des Ist-Moments an das gewünschte Soll-Moment wird überprüft, ob die ermittelten Soll-Momentenwerte innerhalb des stellbaren Bereiches des jeweiligen Einzelantriebs liegen. Damit fließt der jeweils mögliche Momentenbereich, der durch die jeweiligen Einzelantriebe geliefert werden kann, in die Berechnung ein. Ferner wird dadurch sichergestellt, dass die Fahrzeugsteuerung nur solche Soll-Momente anfordert, die auch von den Einzelantrieben eines Hybridantriebes, geliefert werden können. Damit kann ausgeschlossen werden, dass ein zu hohes Antriebsmoment aufgrund des Nichterfüllens eines Momentenwunsches bei einem Fahrzeug, welches mit einem Hybridantrieb angetrieben ist, angefordert wird. Dadurch wird die Sicherheit eines solchen Fahrzeugs sowie dessen Beherrschbarkeit verbessert. In vorteilhafter Weise kann die Überprüfung sehr einfach vorgenommen werden, da lediglich überprüft werden muss, ob das berechnete Soll-Moment innerhalb zurückgemeldeter Momentenbereichsgrenzen liegt. Ferner lässt sich durch die erfindungsgemäß vorgeschlagene Lösung vermeiden, in der Überwachungsebene (2. Ebene) des Fahrzeugsteuergerätes die Funktionsebene (1. Ebene des Fahrzeugsteuergeräts hinsichtlich Eigenfunktionalitäten und dynamischem Verhalten der Einzelantriebe nachzubilden, was schlussendlich den zu leistenden Entwicklungs- und Applikationsaufwand erheblich herabsetzt.

### Zeichnung

Anhand der Zeichnung wird die Erfindung nachstehend eingehender beschrieben.

Es zeigt:
Figur 1 eine kontinuierliche Momentenüberwachung innerhalb eines Fahrzeugsteuergerätes zwischen einem zulässigen Moment M_{zul} und einem Soll-Moment Mₛₒₗₗ, welches von den Soll-Momentenanteilen zweier Antriebe geliefert wird,
Figur 2 eine Gegenüberstellung der einzelnen Momentenanteile der Einzelantriebe sowie eines daraus resultierenden Momentes Mᵣₑₛ und ein einzelantriebsabhängiger Fehler und
Figur 3 die Implementierung einer Bereichsgrenzenüberprüfung der Einzelantriebe innerhalb eines Fahrzeugsteuergerätes.

### Ausführungsbeispiele

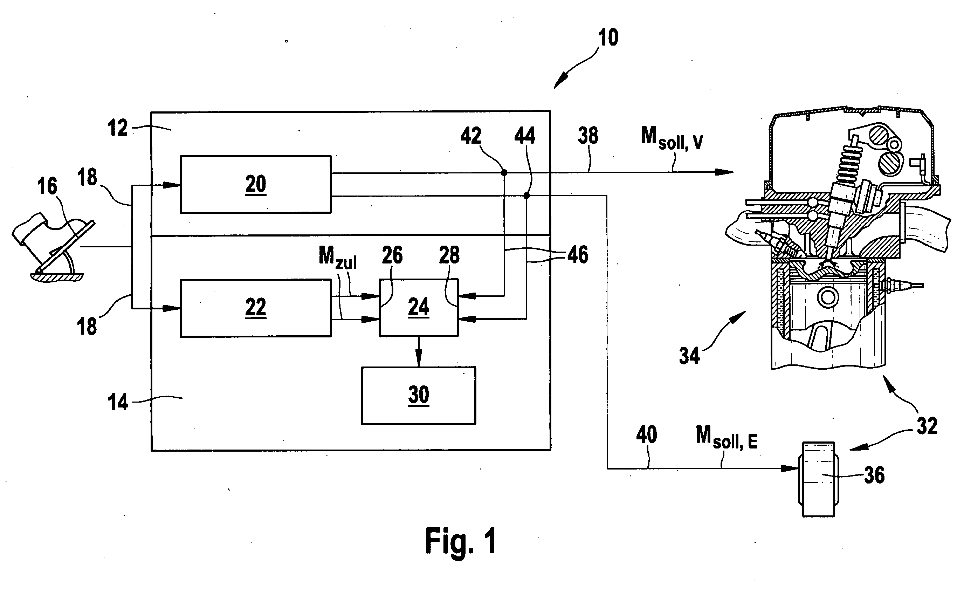

Figur 1 zeigt eine kontinuierliche Momentenüberwachung innerhalb eines Fahrzeugsteuergerätes, wobei eine kontinuierliche Momentenüberwachung in einer Vergleichsstufe zwischen einem zulässigen Moment M_{zul} und Soll-Momenten M_{soll,V} beziehungsweise M_{soll,E} durchgeführt wird.

Ein in Figur 1 dargestelltes Fahrzeugsteuergerät 10 umfasst eine Funktionsebene 12 (1. Ebene) sowie eine Überwachungsebene 14 (2. Ebene). Beide Ebenen 12, 14 sind in das Fahrzeugsteuergerät 10 integriert. Je nach vom Fahrer bestimmter Position eines Fahrpedals 16, welches als Fahrerwunsch-Übertragungseinrichtung dient, wird einer in der Funktionsebene 12 vorgesehenen Berechnungsstufe 20 als auch einer Berechnungsstufe 22 in der Überwachungsebene 14 eine Sollvorgabe 18 eines Soll-Moments aufgeprägt. In der Funktionsebene 12 errechnet die Berechnungsstufe 20 sowohl ein Soll-Moment M_{Soll,V} 38 als auch eine Vorgabe für ein Soll-Moment M_{soll,E} 40. Die Soll-Momente M_{soll,V} 38 sowie M_{soll,E} 40 werden einem Hybridantrieb 32, der zumindest eine Verbrennungskraftmaschine 34 als auch mindestens einen Elektroantrieb 36 umfasst, aufgegeben. Das in der Berechnungsstufe 20 ermittelte Soll-Moment M_{soll,V} 38 wird an die Verbrennungskraftmaschine 34 des Hybridantriebs 32 übertragen, während das in der Berechnungsstufe 20 ermittelte Soll-Moment M_{soll,E} 40 an den mindestens einen Elektroantrieb 36 übertragen wird.

In der Überwachungsebene 14 (2. Ebene) des Fahrzeugsteuergerätes 10 erfolgt anhand der Sollvorgabe 18 in der Berechnungsstufe 22 die Ermittlung eines zulässigen Moments M_{zul}. Dieses wird an eine Vergleichsstufe 24 übertragen. An die Vergleichsstufe 24 werden ferner über einen Abgriffspfad 46 an den Abgriffen 42 beziehungsweise 44 die in der Berechnungsstufe 20 in der Funktionsebene 12 ermittelten Werte für die Soll-Momente M_{soll,V} 38 sowie M_{soll,E} 40 für die Einzelantriebe 34, 36 des Hybridantriebs 32 übertragen. Abhängig vom Resultat des Vergleichs 24 folgt eine Fehlerreaktion 30. Die Vergleichsstufe 24 umfasst mindestens einen Eingang 26 für das zulässige Moment M_{zul} sowie Eingänge 28 für mindestens die Soll-Momente M_{soll,V} 38 und M_{soll,E} 40.

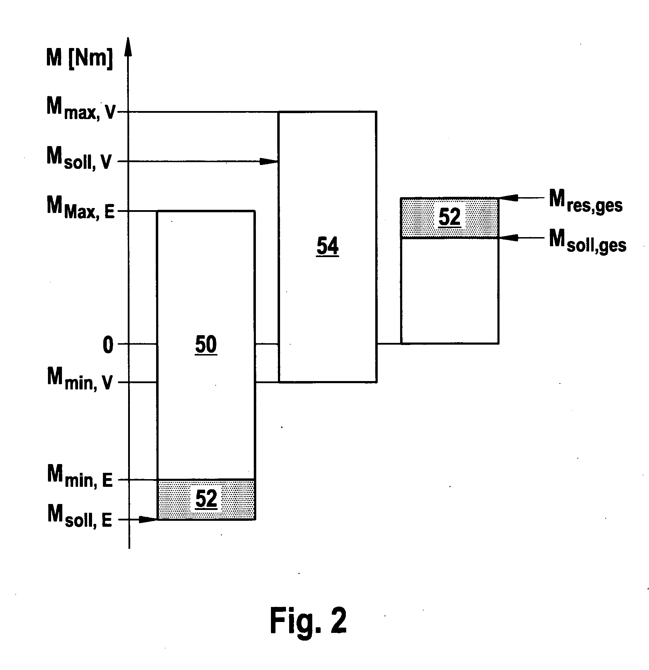

In der Darstellung gemäß Figur 2 ist die Entstehung eines Momentenfehlers ohne eine Überprüfung des Bereiches dargestellt, in welchen die jeweiligen Einzelantriebe eines Mehrfachantiiebes Momente unter Berücksichtigung aktueller Betriebsbedingungen stellen können. Nachfolgend wird dies am Beispiel eines Parallelhybiidantiiebes beschrieben.

Mit einem Mehrfachantrieb, wie zum Beispiel einem Hybridantheb 32 mit mindestens einer Verbrennungskraftmaschine 34 und mindestens einem Elektroantrieb 36 kann zum Beispiel ein Laden einer Fahrzeugbatterie während der Fahrt erfolgen. Dazu soll - als Beispiel - der mindestens eine Elektroantrieb 36 ein negatives Moment, so zum Beispiel - 100 Nm stellen, um die Fahrzeugbatterie zu laden. Der mindestens eine Elektroantrieb 36 wird dazu im Generatorbetrieb betrieben. Um das gewünschte Antriebsmoment von zum Beispiel 200 Nm zu erhalten, wird das Fahrzeugsteuergerät 10 das Moment der mindestens einen Verbrennungskraftmaschine 31 um den Betrag von 300 Nm erhöhen. Kann nun der mindestens eine Elektroantrieb 36 das geforderte negative Moment nicht stellen, so zum Beispiel aufgrund einer Überhitzung oder auch aus anderen Gründen nur noch ein negatives Moment von -10 Nm bereitstellen, so liegt ein zu hohes Antriebsmoment vor, im vorliegenden Falle 290 Nm, welches das gewünschte Antriebsmoment im vorliegenden Beispiel von zum Beispiel 200 Nm um 90 Nm übersteigt. Ein in Figur 2 dargestellter Momentenbereich, innerhalb dessen der mindestens eine Elektroantrieb 36 betrieben werden kann, ist durch Bezugszeichen 50 kenntlich gemacht. Der mindestens eine Elektroantrieb 36 vermag ein Maximalmoment von M_{max,E} sowie ein betragsmäßig identisches Minimalmoment M_{min,E} zur Verfügung zu stellen. Durch Bezugszeichen 52 ist ein Fehler angedeutet, der dadurch entsteht, dass ein Soll-Moment M_{soll,E} gewünscht wird, welches außerhalb des Momentenbereiches des mindestens einen Elektroantiiebs 50 liegt.

Bezugszeichen 54 bezeichnet einen Momentenbereich, innerhalb dessen die mindestens eine Verbrennungskraftmaschine 34 des Hybridantriebs 32 betrieben werden kann. Der Momentenbereich 54 für die Verbrennungskraftmaschine 34 ist durch ein Maximalmoment M_{max,V} und ein Minimalmoment M_{min,V} begrenzt, innerhalb dessen die mindestens eine Verbrennungskraftmaschine 34 betrieben werden kann. Im Falle des Momentenbereiches 54 liegt der absolute Betrag des Maximalmomentes M_{max,V} oberhalb des Absolutbetrages des Minimalmomentes M_{min,V}.

Hinsichtlich des sich einstellenden resultierenden Momentes M_{res,ges} ergibt sich ein Wert, der das Gesamtsoll-Moment M_{soll,ges} um das Fehlermoment 52 übersteigt. In diesem Falle ist das sich einstellende resultierende Gesamtmoment M_{res,ges} größer als das gewünschte Soll-Moment M_{soll,gesamt,} welches sich aus den Soll-Momenten für den mindestens einen Elektroantrieb 36 M_{soll,E} 40 und das Sollmoment M_{soll,V} 38 für die mindestens eine Verbrennungskraftmaschine 34 zusammensetzt. In diesem Falle würde eine unzulässig starke Beschleunigung eines Fahrzeuges mit einem Mehrfachantrieb wie beispielsweise einem Hybridantrieb 32 auftreten.

Dies hat seine Ursache darin, dass die in Figur 1 dargestellte Überwachungsebene 14 des Fahrzeugsteuergerätes 10 diese Fehlerail nicht bemerkt, da das Summen-Soll-Moment kowekt ist und keine Rückmeldung in der Funktionsebene 14 des Fahrzeugsteuergerätes 10 dahingehend vorliegt, ob das angeforderte Moment des jeweiligen Einzelantriebes, im vorliegenden Falle gemäß Figur 2 des mindestens einen Elektroantriebes 36, innerhalb des Momentenbereiches 50 liegt, innerhalb dessen das angeforderte Moment, in diesem Falle M_{soll,E} stellbar ist. Eine Lösung dieses Problems könnte darin liegen, dass ein Vergleich zwischen dem zulässigen Moment M_{zul} und dem vom Hybridantrieb 32, d.h. gebildet aus der Summe des von den Einzelantrieben 34, 36, abgegebenen Ist-Momentes erfolgt. Dies zieht jedoch einen sehr hohen Aufwand nach sich, da die Funktionsebene 12 (erste Ebene) des Fahrzeugsteuergerätes 10 in der Überwachungsebene 14 (zweite Ebene) des Fahrzeugsteuergerätes 10 gebildet werden müsste, was einen sehr hohen Applikations- und Entwicklungsaufwand für eine kontinuierliche Momentenüberwachung nach sich ziehen würde.

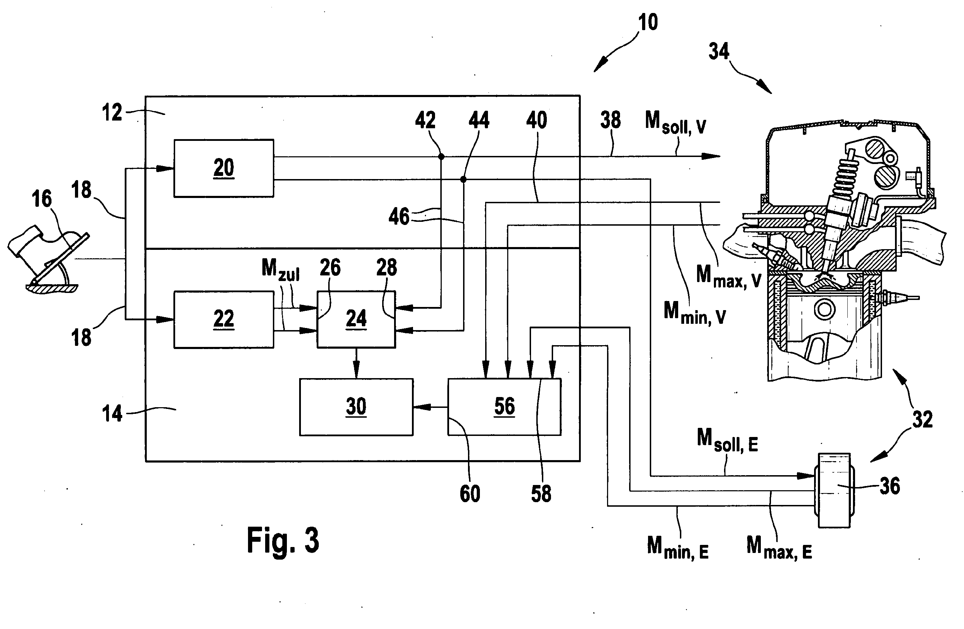

Wie in Figur 3 dargestellt, wird erfindungsgemäß vorgeschlagen, eine Momentenbereichsübeiprüfung 56 in der Überwachungsebene 14 (zweite Ebene) des Fahrzeugsteuergerätes 10 zu implementieren. Innerhalb der Momentenbereichsüberprüfung 56 wird festgestellt, ob ein zu hohes Antriebsmoment aufgrund eines nicht stellbaren Momentes vorliegt. Unter einem nicht stellbaren Moment wird ein Drehmoment verstanden, welches außerhalb der durch die jeweiligen Moment-Obergrenzen M_{max,E} beziehungsweise M_{min,E} begrenzten Momentenbereich 50 des mindestens einen Elektroantriebes 36 liegt und/oder ein Drehmoment, welches außerhalb des durch die Obergrenze M_{max,V} beziehungsweise die Untergrenze M_{min,V}, begrenzten Momentenbereich 54 für die mindestens eine Verbrennungskraftmaschine 34 liegt. Die
mindestens eine Verbrennungskraftmaschine 34 und der mindestens eine Elektroantrieb 36 melden dazu die aktuellen Betriebsgrenzen an das Fahrzeugsteuergerät 10 zurück, insbesondere in die Überwachungsebene 14 (zweite Ebene) des Fahrzeugsteuergerätes 10. Dort stehen die von der mindestens einen Verbrennungskraftmaschine 34 und dem mindestens einen Elektroantrieb 36 jeweils rückgemeldeten Parameter M_{max,V}, M_{min,V}, M_{max,E} und M_{min,E} an Eingängen 58 einer Momentenbereichsüberprüfung 56 als Eingangsgrößen zur Verfügung. Zusätzlich zum bisher durchgeführten Momentenvergleich hinsichtlich der Sollmomente der Einzelantrieben 34, 36 mit den zulässigen Momenten M_{zul} wird nunmehr innerhalb der Momentenbereichsüberprüfung 56 in der Überwachungsebene 14 (erste Ebene) noch geprüft, ob die ermittelten Soll-Momente M_{soll,V'} 38 sowie M_{soll,E} 40 innerhalb der Momentenbereiche 50 beziehungsweise 54 für die mindestens eine Verbrennungskraftmaschine 34 sowie den mindestens einen Elektroantrieb 36 liegen. Dadurch wird sichergestellt, dass das Fahrzeugsteuergerät 10 nur solche Soll-Momente anfordert, die auch von der mindestens einen Verbrennungskraftmaschine 34 beispielsweise dem mindestens einen Elektroantrieb 36 des Hybridantriebes 32 unter Berücksichtigung von deren aktuellen Betriebsparametem umgesetzt werden können. Auf diese Weise wird ein zu hohes resultierendes Moment M_{res,ges}, wie in Figur 2 dargestellt, aufgrund des Nichterfüllens eines Momentenwunsches durch die mindestens eine Verbrennungskraftmaschine 34 und den mindestens einen Elektroantrieb 36 wirksam unterbunden. Dadurch wird die Beherrschbarkeit des Fahrzeugs erheblich verbessert. Ein weiterer Vorteil des erfindungsgemäß vorgeschlagenen Verfahrens ist darin zu erblicken, dass in einer äußerst einfachen Umsetzung dieser Momentenbereichsübeiprüfung 56 lediglich überprüft werden muss, ob das in der Funktionsebene 12 (erste Ebene) berechnete Soll-Moment, d.h. die Anforderung des Soll-Moments M_{soll,V} 38 für die mindestens eine Verbrennungskraftmaschine 34 sowie die Anforderung des Soll-Moments M_{soll,E} 40 für den mindestens einen elektrischen Antrieb 36 innerhalb der von der mindestens einen Verbrennungskraftmaschine 34 sowie des mindestens einen Elektroantriebes 36 zurückgemeldeten Momentenbereiche 50 beziehungsweise 54 liegt. Damit entfällt eine Nachbildung der Funktionsebene 12 (erste Ebene) in der Überwachungsebene 14 (zweite Ebene) des Fahrzeugsteuergerätes 10 gemäß Figur 3. Die Sollmomentenwerte werden durch eine Vergleichsstufe 24 sowie eine Bereichsgrenzenprüfung abgesichert. Dies macht eine Nachbildung der Eigenfunktionalitäten der Einzelantriebe 34, 36 in der ersten Überwachungsebene 14 überflüssig, da kein resultierender Ist-Momentenvergleich benötigt wird, um die Sicherheit zu gewährleisten. Das Gesamt-Ist-Moment des Mehrfachantriebes ist nicht zu überprüfen.

Die in der Berechnungsstufe 20 zur Vorgabe berechneten Soll-Momente M_{soll,V} 38 sowie M_{soll,E} 40 ermittelten Werte werden an Abgriffen 42 beziehungsweise 44, welche in der Funktionsebene 12 (erste Ebene) des Fahrzeugsteuergerätes 10 liegen, abgegriffen und an mindestens einen Eingang 28 der in der Überwachungsebene 12 (zweite Ebene) vorgesehenen Vergleichsstufe 24 übertragen. Dort werden die errechneten Vorgaben Soll-Momente M_{soll,V} 38 beziehungsweise M_{soll,E} 40 mit den in der Überwachungsebene 14 berechneten zulässigen Momenten M_{zul} verglichen. Abhängig vom Resultat des Momentenvergleichs in der Vergleichsstufe 24 erfolgt eine Fehlerreaktion 30. Die in der Überwachungsebene 14 (zweite Ebene) implementieile Momentenbereichsüberprüfung 56 erzeugt am Ausgang 60 ein eine Fehlerreaktion 30 auslösendes Signal für den Fall, dass die Vorgaben für die Soll-Momente M_{soll,V} 38 beziehungsweise M_{soll,E} 40 außerhalb der durch die jeweiligen Ober- und Untergrenzen, M_{max,V}, M_{max,E} beziehungsweise M_{min,V} beziehungsweise M_{min,E} liegen. In diesem Falle kann das angeforderte Drehmoment gemäß der Vorgaben 38 beziehungsweise 40 durch zumindest einen der Einzelantriebe des Hybridantriebes 32 nicht bereitgestellt werden, was im Rahmen der Momentbereichsüberprüfung 56 festgestellt wird und zur Ausgabe eines dementsprechenden Fehlersignals an die Fehlerreaktion 30 führt. Durch die in die Überwachungsebene 14 (zweite Ebene) integrierte Momentenbereichsüberprüfung 56 kann bei Änderungen im Antriebsstrang eines Fahrzeugs mit Hybridantrieb 32 verhindert werden, dass bei Ersatz einer Komponente, so zum Beispiel eines Elektroantriebes 36 eine komplette Neu-Adaption in der Funktionsebene 12 des Fahrzeugsteuergerätes 10 vorgenommen werden muss.

## Patentansprüche

1. Verfahren zur Steuerung einer Fahrzeugantriebseinheit (32), die mindestens zwei einzelne Antriebe (34, 36) umfasst, von denen mindestens einer ein negatives Moment stellen kann, mit einem Fahrzeugsteuergerät (10), innerhalb dessen ein kontinuierlicher Momentenvergleich (24) innerhalb einer Überwachungsebene (14) erfolgt, in der ein zulässiges Moment M_{zul} durch eine Berechnungsstufe (22) in Abhängigkeit von einer Sollvorgabe (18) ermittelt und mit innerhalb einer Funktionsebene (12) durch eine weitere Berechnungsstufe (20) in Abhängigkeit von der Sollvorgabe (18) ermittelten Soll-Momenten M_{soll,V} (38), M_{soll,E} (40) verglichen wird, **dadurch gekennzeichnet, dass** mittels einer Momentenbereichsüberprüfung (56) überprüft wird, ob die innerhalb der Funktionsebene (12) ermittelten Soll-Momente M_{soll,V} (38), M_{soll,E} (40) innerhalb von in der Überwachungsebene (14) gebildeten Momentenbereichen (50, 54) der mindestens zwei Einzelantriebe (34, 36) liegen, bevor die Bildung eines Gesamt-Soll-Momentes M_{soll,ges} erfolgt, wobei Abhängig vom Momentvergleich (24) und der Momentbereichsüberprüfung (56) eine Fehlerreaktion (30) eingeleitet wird.

2. Verfahren gemäß Anspruch 1, wobei die Fahrzeugantriebseinheit (32) mindestens eine Verbrennungskraftmaschine (34) und mindestens einen Elektroantrieb (36) umfasst, **dadurch gekennzeichnet, dass** der Momentenbereich (54) der mindestens einen Verbrennungskraftmaschine (34) durch Momentenbereichsgrenzen M_{max,V} und M_{min,V} und der Momentenbereich (50) des mindestens einen Elektroantriebs (36) durch Momentenbereichsgrenzen M_{max,E} und M_{min,E} begrenzt sind.

3. Verfahren gemäß Anspruch 2, **dadurch gekennzeichnet, dass** die Momentenbereichsgrenzen M_{max,V}, M_{min,V}, M_{max,E} und M_{min,V} kontinuierlich an die Überwachungsebene (14) zurückgemeldet werden.

4. Verfahren gemäß Anspruch 1, **dadurch gekennzeichnet, dass** die ermittelten Soll-Momente M_{soll,V} (38) und M_{soll,E} (40) in einer Funktionsebene (12) des Fahrzeugsteuergerätes (10) ermittelt werden und an die kontinuierliche Momentenüberwachung (24) in der Überwachungsebene (14) innerhalb des Fahrzeugsteuergerätes (10) übertragen werden.

5. Verfahren gemäß Anspruch 2, **dadurch gekennzeichnet, dass** die Momentenbereichsüberprüfung (56) bei außerhalb der Momentenbereichsgrenzen M_{max,V}, M_{min,V}, M_{max,E} und M_{min,V} liegenden Soll-Momenten M_{soll,V} (38) und M_{soll,E} (40) eine Fehlerreaktion (30) auslöst.

6. Verfahren gemäß Anspruch 2, **dadurch gekennzeichnet, dass** die Momentenbereichsgrenzen M_{max,V}, M_{min,V}, M_{max,E} und M_{min,V} in Steuergeräten der mindestens einen Verbrennungskraftmaschine (34) und des mindestens einen Elektroantriebes (36) kontinuierlich aktualisiert werden.

7. Verfahren gemäß Anspruch 2, **dadurch gekennzeichnet, dass** der kontinuierliche Momentenvergleich (24) zwischen dem zulässigen Moment M_{zul} und den Soll-Momenten M_{soll,V} (38) und M_{soll,E} (40) parallel zur Momentenbereichsüberprüfung (56) zwischen den Soll-Momenten M_{soll,V} (38), M_{soll,E} (40) und den Momentenbereichsgrenzen M_{max,V}, M_{min,V}, M_{max,E} und M_{min,E} durchgeführt wird.

8. Fahrzeugsteuergerät (10) für einen Mehrfachantrieb (32) zur Durchführung des Verfahrens gemäß einem oder mehrerer der Ansprüche 1 bis 7 mit einer Funktionsebene (12) und einer Überwachungsebene (14) für mindestens eine Verbrennungskraftmaschine (34) und mindestens einen Elektroantrieb (36), **dadurch gekennzeichnet, dass** in der Überwachungsebene (14) eine Momentenbereichsüberprüfung (56) implementiert ist, in der Soll-Momente M_{soll,V} (38) und M_{soll,E} (40) mit jeweils aktualisierten Momentenbereichsgrenzen M_{max.V}, M_{min,V}, M_{max,E} und M_{min,E} vor Bildung eines Gesamt-Soll-Momentes M_{soll,ges} verglichen werden.

9. Fahrzeugsteuergerät (10) gemäß Anspruch 8, **dadurch gekennzeichnet, dass** in der Überwachungsebene (14) sowohl ein kontinuierlicher Momentenvergleich (24) als auch die kontinuierliche Momentenbereichsüberprüfung (56) implementiert sind.

## Claims

1. Method for controlling a vehicle drive unit (32) which comprises at least two individual drives (34, 36), at least one of which can produce a negative torque, having a vehicle control unit (10) within which a continuous torque comparison (24) takes place within a monitoring level (14) in which a permissible torque Mpₑᵣₘ is determined by a calculation stage (22) as a function of a predefined reference value (18) and is compared with reference torques M_{ref,V} (38), M_{ref, E} (40) determined within a functional level (12) by a further calculation stage (20) as a function of the predefined reference value (18), **characterized in that** by means of a torque range check (56) it is checked whether the reference torques M_{ref,V}(38), M_{ref,E} (40) determined within the functional level (12) lie within torque ranges (50, 54), formed in the monitoring level (14), of the at least two individual drives (34, 36) before the formation of a total reference torque M_{ref,tot} takes place, wherein a fault reaction (30) is initiated as a function of the torque comparison (24) and the torque range check (56).

2. Method according to Claim 1, wherein the vehicle drive unit (32) comprises at least one internal combustion engine (34) and at least one electric drive (36), **characterized in that** the torque range (54) of the at least one internal combustion engine (34) is bounded by torque range limits M_{max,V} and M_{min,V} and the torque range (50) of the at least one electric drive (36) is bounded by torque range limits M_{max,E} and M_{min,E}.

3. Method according to Claim 2, **characterized in that** the torque range limits M_{max,V}, M_{min,V}, M_{max,E} and M_{min,V} are signalled back continuously to the monitoring level (14).

4. Method according to Claim 1, **characterized in that** the determined reference torques M_{ref,V} (38) and M_{ref,E} (40) are determined in a functional level (12) of the vehicle control unit (10) and are transmitted to the continuous torque monitoring means (24) in the monitoring level (14) within the vehicle control unit (10).

5. Method according to Claim 2, **characterized in that** the torque range check (56) triggers a fault reaction (30) in the case of reference torques M_{ref,V} (38) and M_{ref,E} (40) which are outside the torque range limits M_{max,V}, M_{min,V}, M_{max,E} and M_{min,V·}

6. Method according to Claim 2, **characterized in that** the torque range limits M_{max,V}, M_{min,V}, M_{max,E} and M_{min,V} are continuously updated in control units of the at least one internal combustion engine (34) and of the at least one electric drive (36).

7. Method according to Claim 2, **characterized in that** the continuous torque comparison (24) is carried out between the permissible torque Mₚₑᵣₘ and the reference torques M_{ref,V} (38) and M_{ref,E} (40) in parallel with the torque range check (56) between the reference torques M_{ref,V}, (38), M_{ref,E} (40) and the torque range limits M_{max,V}, M_{min,V}, M_{max,E} and M_{min,E}.

8. Vehicle control unit (10) for a multiple drive (32) for carrying out the method according to one or more of Claims 1 to 7, having a functional level (12) and a monitoring level (14) for at least one internal combustion engine (34) and at least one electric drive (36), **characterized in that** a torque range check (56), in which reference torques M_{ref,V} (38) and M_{ref,E} (40) are compared with the respectively updated torque range limits M_{max,V}, M_{min,V}, M_{max,E} and M_{min,E} before the formation of a total reference torque M_{ref},ₜₒₜ, is implemented in the monitoring level (14).

9. Vehicle control unit (10) according to Claim 8, **characterized in that** both a continuous torque comparison (24) and the continuous torque range check (56) are implemented in the monitoring level (14).

## Revendications

1. Procédé de commande d'une unité d'entraînement de véhicule (32), laquelle comprend au moins deux entraînements (34, 36) indépendants, dont au moins l'un peut produire un couple négatif, comprenant un contrôleur de véhicule (10) à l'intérieur duquel a lieu une comparaison de couple (24) continue au sein d'un plan de surveillance (14), dans lequel un couple admissible M_{zul} est déterminé par un étage de calcul (22) en fonction d'une indication de consigne (18) puis comparé au sein d'un plan de fonctionnement (12) par un étage de calcul supplémentaire (20) en fonction de l'indication de consigne (18) avec des couples de consigne M_{soll,V} (38), M_{soll,E} (40) déterminés, **caractérisé en ce qu'**un contrôle est effectué au moyen d'un dispositif de contrôle de plage de couples (56) pour vérifier si les couples de consigne M_{soll,V} (38), M_{soll,E} (40) déterminés au sein du plan de fonctionnement (12) se trouvent à l'intérieur de plages de couple (50, 54) des au moins deux entraînements (34, 36) indépendants formées dans le plan de surveillance (14), avant que n'ait lieu la formation d'un couple de consigne total M_{soll,ges}, une réaction sur erreur (30) étant initiée en fonction de la comparaison des couples (24) et du contrôle de la plage de couples (56).

2. Procédé selon la revendication 1, selon lequel l'unité d'entraînement de véhicule (32) comprend au moins un moteur à combustion interne (34) et au moins un entraînement électrique (36), **caractérisé en ce que** la plage de couples (54) de l'au moins un moteur à combustion interne (34) est limitée par des limites de plage de couples M_{max,V} et M_{min,V} et la plage de couples (50) de l'au moins un entraînement électrique (36) est limitée par des limites de plage de couples M_{max,E} et M_{min,E}.

3. Procédé selon la revendication 2, **caractérisé en ce que** les limites de plage de couples M_{max,V}, M_{min,V}, M_{max,E} et M_{min,E} sont continuellement renvoyées au plan de surveillance (14).

4. Procédé selon la revendication 1, **caractérisé en ce que** les couples de consigne M_{soll,V} (38) et M_{soll,E} (40) déterminés sont déterminés dans un plan de fonctionnement (12) du contrôleur de véhicule (10) et transmis à la surveillance de couple (24) continue dans le plan de surveillance (14) à l'intérieur du contrôleur de véhicule (10).

5. Procédé selon la revendication 2, **caractérisé en ce que** le contrôle de la plage de couples (56) déclenche une réaction sur erreur (30) si les couples de consigne M_{soll,V} (38) et M_{soll,E} (40) se trouvent en-dehors des limites de plage de couples M_{max,V}, M_{min,V}, M_{max,E} et M_{min,E}.

6. Procédé selon la revendication 2, **caractérisé en ce que** les limites de plage de couples M_{max,V}, M_{min,V}, M_{max,E} et M_{min,E} sont continuellement mises à jour dans les contrôleurs de l'au moins un moteur à combustion interne (34) et de l'au moins un entraînement électrique (36).

7. Procédé selon la revendication 2, **caractérisé en ce que** la comparaison de couple (24) continue entre le couple admissible. M_{zul et} les couples de consigne M_{soll,V} (38) et M_{soll,E} (40) est effectuée parallèlement au contrôle de la plage de couples (56) entre les couples de consigne M_{soll,V} (38) et M_{soll,E} (40) et les limites de plage de couples M_{max,V}, M_{min,V}, M_{max,E} et M_{min,E}.

8. Contrôleur de véhicule (10) pour un entraînement multiple (32) destiné à mettre en oeuvre le procédé selon une ou plusieurs des revendications 1 à 7 avec un plan de fonctionnement (12) et un plan de surveillance (14) pour au moins un moteur à combustion interne (34) et au moins un entraînement électrique (36), **caractérisé en ce qu'**un dispositif de contrôle de plage de couples (56) est mis en oeuvre dans le plan de surveillance (14), dans lequel les couples de consigne M_{soll,V} (38) et M_{soll,E} (40) sont comparés avec des limites de plage de couples M_{max,V}, M_{min,V}, M_{max,E} et M_{min,E} respectivement mises à jour avant la formation d'un couple de consigne total M_{soll,ges}.

9. Contrôleur de véhicule (10) selon la revendication 8, **caractérisé en ce qu'**une comparaison de couple (24) continue ainsi que le contrôle continu de la plage de couples (56) sont mis en oeuvre dans le plan de surveillance (14).
